Europäisches Patentamt

European Patent Office

Office européen des brevets

(11) Publication number: **0 054 361**
A2

(12) # EUROPEAN PATENT APPLICATION

(21) Application number: **81305498.8**

(22) Date of filing: **20.11.81**

(51) Int. Cl.³: **B 65 G 65/48**
B 65 G 53/48, B 29 B 5/00

(30) Priority: **16.12.80 US 216981**

(43) Date of publication of application:
**23.06.82 Bulletin 82/25**

(84) Designated Contracting States:
BE CH DE FR GB IT LI NL SE

(71) Applicant: **UNION CARBIDE CORPORATION**
**Old Ridgebury Road**
**Danbury Connecticut 06817(US)**

(72) Inventor: **Casto, William Harold**
**230 Scenic Drive**
**St. Albans West Virginia 25177(US)**

(74) Representative: **Baverstock, Michael George**
**Douglas et al,**
**BOULT, WADE & TENNANT 27 Furnival Street**
**London, EC4A 1PQ(GB)**

(54) Gas-solids separating device for rotary valve inlets.

(57) An apparatus for the transfer of solid, particulate
materials from a first vessel (10) maintained at a relatively
low pressure to a second vessel (30) maintained at a
relatively higher pressure, which apparatus comprising a
rotary valve (20) between the first and second vessels (10, 30)
wherein a vented annular space (24) is provided in a feeder
section positioned between said first vessel (10) and said
valve (20), said vented annular space (24) being positioned
around a throat section (18) directly communicating between
the outlet of said first vessel and the solid inlet of said rotary
valve.

FIG.2

-1-

GAS-SOLIDS SEPARATING DEVICE FOR ROTARY VALVE INLETS

The present invention relates to a gas-solids separating device for rotary valve inlets.

All rotary valves leak some gas when used to transfer solids from one pressure level to another. The leakage rate and its direction depends on the magnitude of the pressure differential. In those cases where the gas flow is counter-current to the solids flow, the gas flow interferes with the solids flow to the point of reducing the rotary valve capacity or stopping the flow altogether.

As employed hereinbelow, the discussion of the transfer of solids from a lower pressure level to a higher pressure level will be carried out in terms of that transfer as is commonly encountered with respect to a solid, particulate material (e.g. synthetic thermoplastic material hopper to a fluidizing gas containing line positioned downstream therefrom at a higher pressure level). While the discussion is in terms of transfer from a material hopper to a conveying line, it is to be understood that the invention involved is equally applicable to the transfer of particulate solid materials from and between other vessels operating at lower and higher pressure levels, respectively.

The industry-wide standard or conventional method for venting of rotary valves consists of a body vent, i.e., a drilled and tapped hole or holes is provided in one side of the valve body from which a vent line extends to the top of the bin. As a particular valve pocket rotates toward the valve inlet, it comes in direct communication with the vent line. The pocket is quickly depressured to become equalized with the top of the bin. Also, nearly all rotary valves leak gas through the clearances between the rotor and valve body. The portion of the gas leakage around the vented side of the feeder also vents through the vent line to the top of the bin. All other leakage (about 50 percent) flows into the bin countercurrent to the solids flow.

Therefore, in accordance with the present invention, an apparatus is provided for the transfer of solid, particulate material from a first vessel maintained at a relatively lower pressure to a second vessel maintained at a relatively higher pressure downstream thereof, employing a rotary valve therebetween, comprising a feeder section positioned to communicate between the outlet of said first vessel and the lower pressure solid inlet side of said rotary valve, an outlet section positioned to communicate between the high pressure solid outlet side of said rotary valve and the inlet of said second vessel, and a vented annular space around and enclosing said feeder section and in communication with the low pressure side of said rotary valve.

In the preferred embodiment of the invention, an apparatus is provided for the transfer of particulate, synthetic thermoplastic materials (such as polyethylene, polypropylene, and the like) from bin hopper means to a fluidized conveying line, employing a rotary valve therebetween, which comprises employing a vented annular space in a feeder section positioned between said hopper outlet

-3-

and said valve inlet, said vented annular space being positioned around a throat section directly communicating between the base of said hopper and the inlet of said rotary valve.

In the apparatus of the preferred embodiment of the invention, the annular space is preferably directly vented to a point near the top of the hopper bin by a vent line passing externally of the hopper vessel or may be directly vented through vent lines passing through the material in the hopper to a point near the top of the material in the hopper vessel. The annular space collects all leakage gas which is routed through the vent line to the top of the bin. This allows the solid to fall freely into the valve pocket without being inhibited by countercurrent gas flow.

In the drawing:

Fig. 1a is a schematic, vertical sectional view of apparatus embodying the invention and having external venting means;

Fig. 1b is a slightly modified schematic, vertical sectional view of apparatus quite similar to that of Fig. 1a but having a more integral feeder section and annular venting space; and

Fig. 2 is a schematic, vertical sectional view of modified apparatus embodying the invention and having internal venting means.

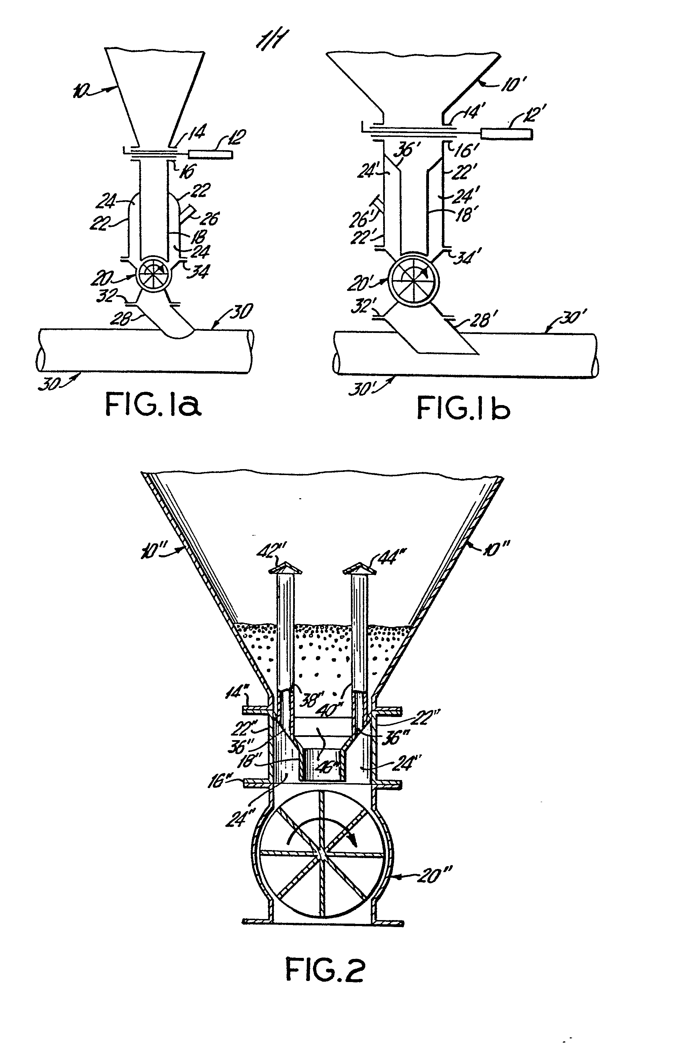

Referring specifically to the embodiment of Fig. 1a of the drawing, the solids-gas separating vent apparatus is provided for the transfer of solid particu-

-4-

late materials from a bin hopper means 10 (provided with side gate exit valve means 12) communicating at its lower ends through flanges 14 and 16 to the inlet, upper end of the feeder throat section 18 which communicates at its outlet, lower end to the lower pressure end of a rotary valve 20. Outer, annular venting chamber 22 is provided around the feeder section to provide an annular chamber 24 which is vented through vent outlet means 26 which communicates to vent lines (not shown) which pass back into bin hopper 10 and terminate at a point near the top thereof, thereby venting to the atmosphere.

The higher pressure end of the rotary valve communicates through an outlet passage 28 to the higher pressure fluidizing (conveying) line 30 to which the solids pass to be fluidized by the higher pressure nonreactive fluidizing gas passing therethrough (such as nitrogen).

The flanges 32 and 34 at both ends of the rotary valve provide means for securely sealing the interior of the rotary valve from the atmosphere.

The quite similar but modified apparatus shown in Fig. 1b of the drawing employs identical (but primed) element identifying numerals employed in Fig. 1b. As shown in Fig. 1b, the lower portion of the feeder throat section 18' is similar to that of the Fig. 1a embodiment, but the upper portion thereof is of enlarged cross-sectional diameter, which approximately corresponds to the diameter of the base of bin hopper 10. Inwardly tapered portion 36' reduces the feeder section of Fig. 1b from the larger to smaller cross-sectional areas.

In the embodiment of apparatus shown in Fig. 2 of the drawing, the construction is somewhat similar to that of the Fig. 1b embodiment, but with some basic differences. In Fig. 2 similar elements have been assigned the same but double-primed element numbers.

As those shown, the hopper 10" is joined to the outer venting chamber 22" which encloses the feeder throat section 18" and tapered portion 36". Internal vent columns 38" and 40" are provided, passing upwardly from communication with the annular chamber 24" through the bin hopper 10" and the solid particulate material contained therein to a point near or above the top thereof. "Rooves" - 42", 44", etc. are positioned on the tops of all such internal vent columns 38", 40", etc. Element 46" is a tapering side wall of the hopper extension.

Conventional vents from rotary valves through the housing walls of the valve to the internal rotary member of the rotary valve, increase the valve leakage and divert approximately half of the gas through the vent line. The other half flows countercurrent to the solids flow. It will be seen that, in the apparatus of the invention, all of the valve leakage gas and the gas normally passing through the valve is vented from the annular vent space.

It has been found that the apparatus embodiment of Figs. 1a and 1b enable the use of a wide range of bin heights (from about 6 to 100 feet).

It is to be noted that the lower end of feeder member 18 may be curved to contour the rotary valve rotor.

-6-

The width of the lower end has been of the order of about one-half of the diameter of the rotor.

The outer diameter of the annular oral, cylindrical or rectangular space 24 is equal to or preferably larger than that of the diameter of the rotor of the rotary valve 20 in order to ensure full venting of the valve to vent space 24.

## EXAMPLES

The equipment used consists of a storage bin with a slide gate on the bottom outlet. Below the slide gate is a short section of pipe and a rotary valve. Below the rotary valve is a pressure conveying line.

Apparatus:

Bin - 12 feet diameter by approximately 80 feet high with a 60 degree cone bottom. Material of construction is epoxy-coated steel (Butler bolted type). The bin outlet is a 14 inch nozzle..

Slide gate - 14 inch.

Rotary valve - 18 inch.

Conveying line - 8 inch

Pipe section - 14 inch to 18 inch cylindrical transition.

Test conditions:

Resin level in bin - approximately 60 feet.

Resin - Granular polyethylene with 0.919 density and 0.8 melt index.

Conveying line pressure - 6 to 10 psig nitrogen depending on solids rate.

In operating the apparatus with conventional side-venting to a point near the top of the hopper (as described above) the rotary valve throughput was 25,000 lbs/hr. at a rotary valve speed of 25.rpm. No change in throughput occurred in varying valve speed from 18 to 25 rpm.

In operating the apparatus in accordance with the invention by employment of a feeder and annular vent passage as described hereinabove in connection with Fig. 1a of the drawing, the throughput was 50,000 lbs/hr. at a valve rotational speed of 11 rpm. Throughput was found to vary linearly at valve speeds from 3 to 11 rpm.

Advantages of the apparatus of the present invention are:

1. It can be fabricated in almost any plant maintenance shop from readily available materials;

2. It reduces the valve leakage by eliminating the need for conventional "body" vents;

3. It diverts all the leakage from the valve through a vent line;

4. The "valve pocket filling efficiency" can be increased to 97+ percent; and

5. It can eliminate the need for an external vent on some systems (i.e., external of the hopper).

CLAIMS:

1. An apparatus for the transfer of solid, particulate material from a first vessel maintained at a relatively lower pressure to a second vessel maintained at a relatively higher pressure downstream thereof, which apparatus comprises a rotary valve between the first and second vessels, a feeder section communicating between the outlet of the first vessel and the lower pressure side of the rotary valve, and an outlet section positioned to communicate between the high pressure side of the rotary valve and the inlet of the second vessel, wherein a vented annular space is provided positioned around the feeder section between the hopper and the valve; the vented annular space directly communicating between venting means and the low pressure side of the rotary valve.

2. An apparatus as claimed in claim 1 wherein the annular space is directly vented to a point near the top of the first vessel by a vent line passing externally of the first vessel.

3. An apparatus as claimed in claim 1 wherein the annular space is directly vented through vent lines passing through the material in the first vessel to a point near the top of the material in the first vessel.

4. An apparatus for the transfer of particulate, synthetic thermoplastic materials from a bin hopper to a fluidized conveying line, which apparatus comprises a rotary valve between the hopper and the line, wherein a vented annular space is provided in a feeder section positioned between the hopper and the valve; the vented annular space being positioned around a throat section directly communicating between the base of the hopper and the top of the rotary valve.

5. An apparatus as claimed in claim 4 wherein the annular space is directly vented to a point near the top of the hopper by a vent line passing externally of the hopper.

6. An apparatus as claimed in claim 4 wherein the annular space is directly vented through vent lines passing through the material in the hopper to a point near the top of the material in the hopper.

MGB/SJW/DR/EA492

FIG.1a

FIG.1b

FIG.2